# EUROPEAN PATENT APPLICATION

(11) **EP 1 804 543 A1**
(43) Date of publication of application: **04.07.2007**
(21) Application number: 06017160.0
(22) Date of filing: 17.08.2006
(51) Int. Cl.: H04Q 7/38

(54) **Method for transmitting and receiving audio data in a mobile communication terminal, and aparatus therefor**

(30) Priority: 27.12.2005 KR 20050130823
(71) Applicant: Samsung Electronics Co., Ltd., Yeongtong-gu Suwon-si, Gyeonggi-do (KR)
(72) Inventor: Choi, Hyun-Suk, Yeongtong-gu Suwon-si Gyeonggi-do (KR)
(74) Representative: Lang, Johannes

(57) **Abstract**

A method and an apparatus for transmitting/receiving audio data in a mobile communication terminal are provided. The method includes a transmit terminal generating n split audio data by splitting input audio data; the transmit terminal sequentially transmitting the n split audio data to a receive terminal; the receive terminal receiving the n split audio data transmitted from the transmit terminal; and the receive terminal outputting audio data by combining the received n split audio data. Accordingly, by splitting audio data, sequentially transmitting the split audio data, and compensating for lost split audio data, transmission/reception of the audio data can be smoothly performed even in a weak electric field call mode, thereby outputting normal audio data.

## Description

### BACKGROUND OF THE INVENTION

### 1. Field of the Invention

The present invention relates generally to a mobile communication terminal. More particularly, the present invention relates to a method and apparatus for transmitting/receiving a call in a mobile communication terminal according to the execution of a call mode in a weak electric field.

### 2. Description of the Related Art

According to the conventional art, a loss of audio data may occur according to electric field strength of a traffic zone. The electric field indicates the intensity of an electronic wave at a receiving position of audio data and can be classified into a strong electric field and a weak electric field according to the intensity of the electronic wave. That is, if a mobile communication terminal located in a weak electric field area (i.e., in which the intensity of an electronic wave is weak) transmits audio data, a loss of the audio data may occur even if a receive mobile communication terminal is located in a strong electric field area, thereby causing intermittent output of audio data from the receive mobile communication terminal. Also, if a mobile communication terminal to receive audio data is located in a weak electric field area, a loss of the audio data may occur even if a mobile communication terminal that is located in a strong electric field area in which the intensity of an electronic wave is strong transmits the audio data.

According to the conventional art, when audio data is transmitted or received, compensation for a loss of the audio data cannot be performed even if a mobile communication terminal is located in a weak electric field area. Therefore, a user cannot avoid listening to the intermittent audio data.

Accordingly, there is a need for an improved system and method for smoothly transmitting/receiving audio data according to call transmission/reception so that a user may avoid listening to intermittent audio data.

### SUMMARY OF THE INVENTION

An aspect of exemplary embodiments of the present invention is to address at least the above problems and/or disadvantages and to provide at least the advantages below. Accordingly, an aspect of exemplary embodiments of the present invention is to provide a method and apparatus for smoothly transmitting/receiving audio data according to call transmission/reception even if a weak electric field is sensed when a call is transmitted/received to/from a mobile communication terminal.

According to one aspect of an exemplary embodiment of the present invention, a method of transmitting/receiving audio data in a mobile communication terminal is provided. A transmit terminal generates n split audio data by splitting input audio data. The transmit terminal sequentially transmits the n split audio data to a receive terminal, the receive terminal receives the n split audio data transmitted from the transmit terminal, and the receive terminal outputs audio data by combining the received n split audio data.

According to another aspect of an exemplary embodiment of the present invention, an apparatus for transmitting/receiving audio data in a mobile communication terminal is provided. The apparatus comprises a transmit terminal and a receive terminal. The transmit terminal changes a phone call mode to a weak electric field call mode when a weak electric field is sensed in the phone call mode, generates n split audio data by splitting input audio data, transmits the generated n split audio data to a receive terminal, and re-transmits lost split audio data to the receive terminal if information on the lost split audio data is received from the receive terminal. The receive terminal changes the phone call mode to the weak electric field call mode when a weak electric field is sensed in the phone call mode, receives the n split audio data from the transmit terminal, determines whether the received n split audio data is lost, transmits information on the lost split audio data, re-receives split audio data corresponding to the lost split audio data from the transmit terminal, and compensates for the lost split audio data.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other exemplary objects, features, and advantages of certain exemplary embodiments of the present invention will be more apparent from the following description taken in conjunction with the accompanying drawings in which:
FIG. 1 is a schematic block diagram of an audio data transmission/reception system according to an exemplary embodiment of the present invention;
FIG. 2 is a block diagram of a mobile communication terminal according to an exemplary embodiment of the present invention;
FIG. 3 is a flowchart illustrating a process of changing a phone call mode according to an exemplary embodiment of the present invention;
FIG. 4 is a flowchart illustrating an operation of a call originating terminal in a weak electric field call mode according to an exemplary embodiment of the present invention;
FIG. 5 is a flowchart illustrating an operation of a call destination terminal in the weak electric field call mode according to an exemplary embodiment of the present invention; and
FIGS. 6A-6E are illustrations of audio data in the weak electric field call mode according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the spirit and scope of the invention. Also, descriptions of well-known functions and constructions are omitted for clarity and conciseness.

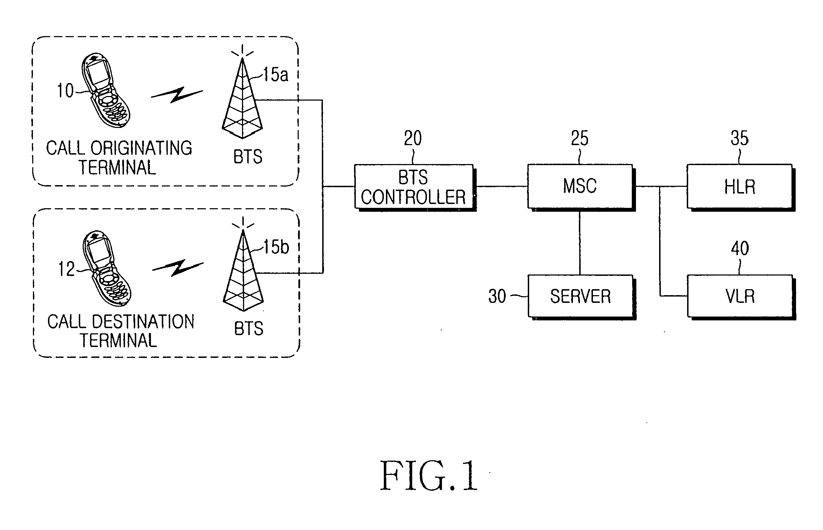

FIG. 1 is a schematic block diagram of an audio data transmission/reception system according to an exemplary embodiment of the present invention. Referring to FIG. 1, a mobile communication system generally includes a plurality of base transceiver stations (BTSs) 15 managing a certain area, a BTS controller 20 controlling the plurality of BTSs 15, a mobile switching center (MSC) 25, a home location register (HLR) 35, and a visitor location register (VLR) 40. The HLR 35 is a component for registering a variety of information on subscribers who have originally registered into the MSC 25. The VLR 40 is a component for registering information on subscribers who have entered into the coverage area of the MSC 25 from another area. A current location of a mobile terminal 10 is recognized through each BTS 15 and reported to the MSC 25 via the BTS controller 20. The HLR 35 and the VLR 40 are used to record information on the movement of subscribers.

The mobile communication system according to an exemplary embodiment of the present invention includes a call-originating mobile communication terminal (hereinafter, a transmit terminal) 10 and a call destination terminal (hereinafter, a receive terminal) 12. The transmit terminal 10 generates an outgoing call and the receive terminal 12 receives a call transmitted from the transmit terminal 10. The mobile communication system also includes a server 30 connected to the transmit terminal 10 via the BTS 15a and the receive terminal 12 via the BTS 15b. When the transmit terminal 10 or the receive terminal 12 connected to the server senses a weak electric field in a phone call mode according to an exemplary embodiment of the present invention, the server 30 changes the phone call mode by sensing a call mode changing signal of the terminal, which has sensed the weak electric field. In an exemplary embodiment of the present invention, a general phone call method is defined as a general phone call mode (a circuit data transmission method), and a communication mode changed when a weak electric field is sensed is defined as a weak electric field call mode (a packet data transmission method). Also, audio data split using a predetermined method is defined as split audio data, and group split audio data is obtained by grouping more than a predetermined number of the split audio data.

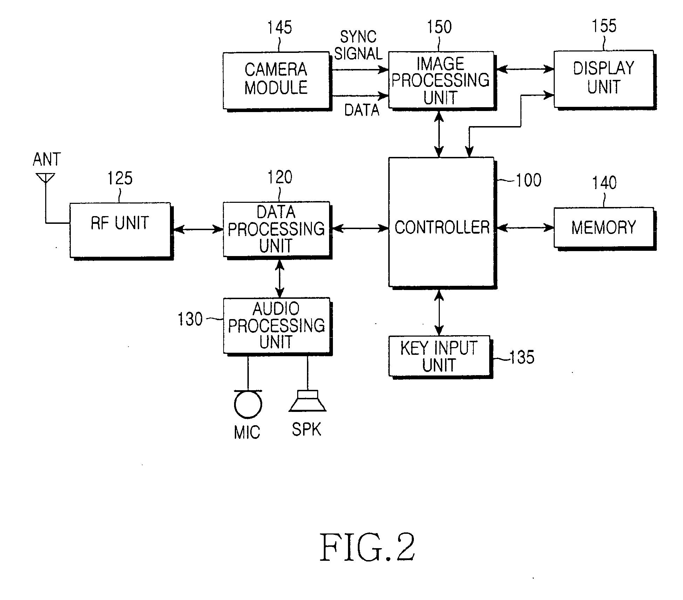

FIG. 2 is a block diagram of a mobile communication terminal according to an exemplary embodiment of the present invention. Referring to FIG. 2, a controller 100 controls a general operation of the mobile communication terminal. The controller 100 may include a data processing unit (modem) 120 and a codec. According to an exemplary embodiment of the present invention, the controller 100 measures electric field strength according to a traffic zone in the phone call mode. When a weak electric field is sensed, the controller 100 performs an alarm for changing the phone call mode to the weak electric field call mode. In the weak electric field call mode, the controller 100 stores audio data in a memory 140 and splits the stored audio data into split audio data that has a predetermined amount. A radio frequency (RF) unit 125 performs a wireless communication function of the mobile communication terminal. The RF unit 125 includes an RF transmitter (not shown) and an RF receiver (not shown). The RF transmitter up-converts a frequency of a signal to be transmitted and amplifies the up-converted signal. The RF receiver low noise amplifies a received signal and down-converts a frequency of the low noise amplified signal. The data processing unit 120 includes a transmitter to encode and modulate the signal to be transmitted and a receiver to demodulate and decode the received signal. According to an exemplary embodiment of the present invention, the RF unit 125 senses the intensity of a high frequency voltage input via an antenna connected to the RF unit 125 so that the controller 100 can determine whether the mobile communication terminal is located in a weak electric field area. Also, the RF unit 125 transmits or receives split audio data generated in the weak electric field call mode changed by the controller 100.

An audio processing unit 130 may include a codec, which includes a data codec processing packet data and an audio codec processing an audio signal such as a speech signal. The audio processing unit 130 converts a digital audio signal input from the data processing unit 120 to an analog audio signal using the audio codec and outputs the converted analog audio signal to a speaker. Alternatively, the audio processing unit 120 converts an analog audio signal input from a microphone to a digital audio signal by using the audio codec and outputs the converted digital audio signal to the data processing unit 120. A key input unit 135 includes keys for inputting numbers and characters and function keys for setting various functions. According to an exemplary embodiment of the present invention, the key input unit 135 is used for a user to change a phone call mode to a weak electric field call mode when an alarm for notifying the change to the weak electric field call mode according to the sensing of a weak electric field is generated by the controller 100.

A memory 140 may include a program memory and a data memory. The program memory may store programs for controlling a general operation of the mobile communication terminal. According to an exemplary embodiment of the present invention, the memory 140 stores audio data according to the weak electric field call mode. The memory 140 also stores the split audio data generated by the controller 100. A camera module 145 includes a camera sensor (not shown) and a signal processing unit. The camera sensor photographs image data and converts an optical signal obtained through the photographing to an electrical signal. The signal processing unit (not shown) converts an analog image signal generated by the camera sensor to digital data. It is assumed that the camera sensor is a charge coupled device (CCD) sensor, and the signal processing unit can be implemented using a digital signal processor (DSP). The camera sensor and the signal processing unit may be implemented in one body or separately.

An image processing unit 150 generates image data for displaying an image signal output from the camera module 145. The image processing unit 150 processes the image signal output from the camera module 145 frame-by-frame, outputs the processed frame image data according to the characteristic and size of a display unit 155. The image processing unit 150 includes an image codec, thereby compressing the frame image data displayed on the display unit 155 in a pre-set method or decompressing the compressed frame image data into original frame image data. The image codec may be a JPEG codec, an MPEG4 codec, or a Wavelet codec. It is also assumed that the image processing unit 150 has an On Screen Display (OSD) function, and thereby, the controller 100 can control the image processing unit 150 to output OSD data according to the screen size of a displayed image. The display unit 155 displays image data output from the image processing unit 150 and user data output from the controller 100 on the screen. The display unit 155 may use a liquid crystal display (LCD). In this case, the display unit 155 may include an LCD controller, a memory for storing image data, and an LCD display component. When the LCD is implemented in a touch screen method, the display unit 155 may operate as an input unit. According to an exemplary embodiment of the present invention, the display unit 155 displays electric field strength at a location at which the mobile communication terminal is located. Also, when the controller 100 performs a change of the phone call mode, the display unit 155 displays a message as a notification of the change of the phone call mode.

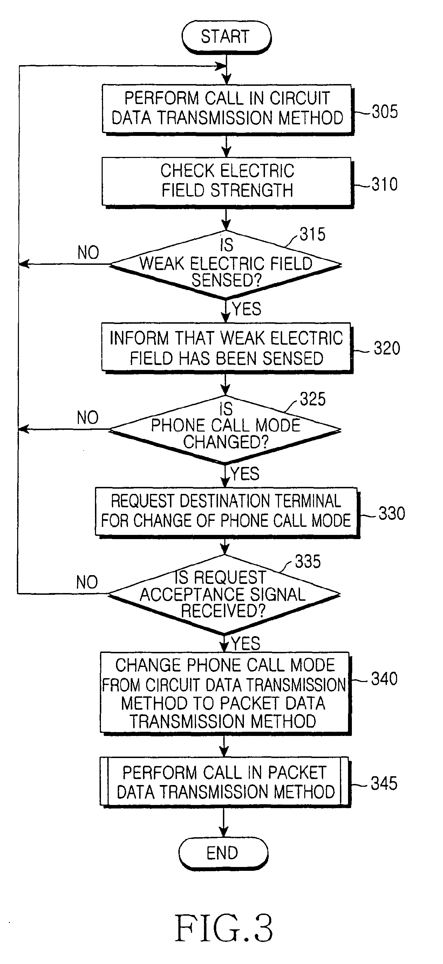

FIG. 3 is a flowchart illustrating a process of changing the phone call mode when a weak electric field is sensed according to an exemplary embodiment of the present invention. Referring to FIG. 3, in step 305, the receive terminal 12 performs the general phone call mode with the transmit terminal 10 in which a speech path between the terminals is a strong electric field state. While performing the general phone call mode, the controllers 100 of the transmit terminal 10 and the receive terminal 12 check electric field strength at a predetermined time or continuously in step 310. In step 315, the controllers 100 of the transmit terminal 10 and the receive terminal 12 determine whether a weak electric field is sensed as a result of the electric field strength being checked. An exemplary embodiment of the present invention illustrates the receive terminal 12 sensing the weak electric field while performing in the general phone call mode. Therefore, when the controller 100 of the receive terminal 12 senses the weak electric field, in step 320, the controller 100 of the receive terminal 12 informs the user by a message and alarm that the weak electric field has been sensed. In step 325, the controller 100 of the receive terminal 12 determines whether the general phone call mode is changed to the weak electric field call mode according to the sensing of the weak electric field. The change to the weak electric field call mode can be performed when the user makes a selection or automatically performed when the weak electric field is sensed. An exemplary embodiment of the present invention illustrates the phone call mode changed by the selection of the user.

When the user makes a selection to change the phone call mode from the general phone call mode to the weak electric field call mode, in step 330, the controller 100 of the receive terminal 12 requests the transmit terminal 10 to change the phone call mode by transmitting the mode change information to the server 30. In step 335, the controller 100 of the receive terminal 12 determines whether a phone call mode change request acceptance signal is received from the transmit terminal 10. When the phone call mode change request acceptance signal is received from the transmit terminal 10, in step 340, the controller 100 of the receive terminal 12 changes the phone call mode from the general phone call mode performed between the transmit terminal 10 and the receive terminal 12 into the weak electric field call mode. That is, the transmit terminal 10 and the receive terminal 12 change a transmission method of input audio data from the circuit data transmission method to the packet data transmission method. Thus, in step 345, the transmit terminal 10 and the receive terminal 12 perform a call in the weak electric field call mode.

As described above, when at least one of the terminals performing a phone call in the general phone call mode senses a weak electric field, the terminal sensing the weak electric field maintains the phone call by transmitting a phone call mode change request to a destination terminal and by changing the general phone call mode from the general phone call mode to the weak electric field call mode.

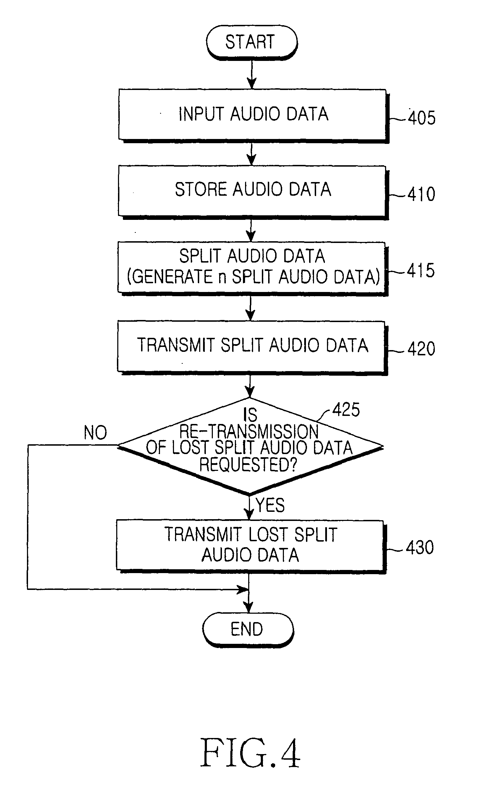

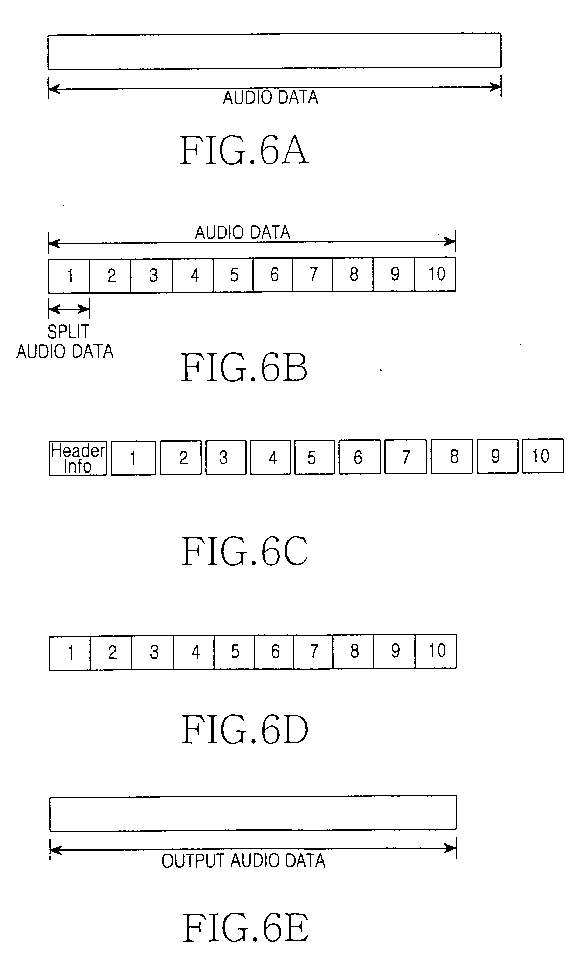

FIG. 4 is a flowchart illustrating an operation of the call originating terminal 10 in the weak electric field call mode according to an exemplary embodiment of the present invention. Referring to FIG. 4, in step 405, the controller 100 of the transmit terminal 10 inputs audio data illustrated in FIG. 6A from the microphone connected to the audio processing unit 130. In step 410, the controller 100 of the transmit terminal 10 stores the input audio data in the memory 140. In step 415, the controller 100 of the transmit terminal 10 generates n split audio data by splitting the audio data stored in the memory 140. The controller 100 of the transmit terminal 10 splits the audio data stored in the memory 140 by a predetermined amount as illustrated in FIG. 6B and stores the split audio data in the memory 140. FIG. 6B is an illustration of an exemplary embodiment of the present invention where the input audio data illustrated in FIG. 6A is split 10 times.

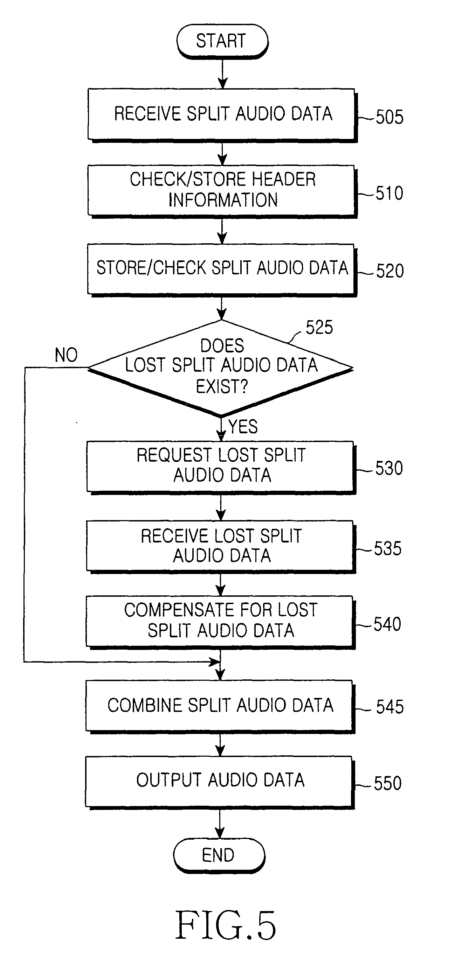

In step 420, the controller 100 of the transmit terminal 10 transmits the split audio data stored in the memory 140 to the receive terminal 12. When the controller 100 of the transmit terminal 10 transmits the split audio data, a header including information on the split audio data is added as illustrated in FIG. 6C. The split audio data information included in the header may include the amount of the split audio data, the number of the split audio data, and an error code referencing a loss of the split audio data. In step 425, the controller 100 of the transmit terminal 10 determines whether a lost split audio data request signal for requesting re-transmission of lost split audio data is received from the receive terminal 12, which has received the split audio data. The lost split audio data request signal received from the receive terminal 12 is a signal used for the receive terminal 12 to request lost split audio data from the transmit terminal 10 when the receive terminal 12 analyzes the header transmitted from the transmit terminal 10 and determines that the lost split audio data exists as a result of the analysis. A process of requesting the lost split audio data will be described in detail with reference to FIG. 5.

If the controller 100 of the transmit terminal 10 receives the lost split audio data request signal from the receive terminal 12 as the determination result of step 425, in step 430, the controller 100 of the transmit terminal 10 transmits the lost split audio data to the receive terminal 12. Since the lost split audio data transmitted in step 430 may be lost again if it is only transmitted once, the lost split audio data is transmitted to the receive terminal 12 at least twice.

As described above, the call originating terminal 10 in the weak electric field call mode stores audio data input from the microphone and generates n split audio data. Then, the call originating terminal 10 transmits the generated split audio data to the receive terminal 12. If the receive terminal 12 requests re-transmission of split audio data corresponding to lost split audio data, the call originating terminal 10 transmits the split audio data corresponding to the lost split audio data at least twice.

FIG. 5 is a flowchart illustrating an operation of the call destination terminal 12 in the weak electric field call mode according to an exemplary embodiment of the present invention. Referring to FIG. 5, in step 505, the controller 100 of the receive terminal 12 receives split audio data stored in the memory 140 of the transmit terminal 10 through the RF unit 125. The received split audio data includes a header containing information on the split audio data. In step 510, the controller 100 of the receive terminal 12 analyzes the header containing the split audio data information. In step 520, the controller 100 of the receive terminal 12 stores the received split audio data in the memory 140 and compares the stored split audio data to the split audio data information contained in the header, such as header information, analyzed in step 510. That is, in step 520, the controller 100 of the receive terminal 12 checks the number, amount, and error code of the split audio data stored in the memory 140 according to the header information analyzed in step 510.

In step 525, the controller 100 of the receive terminal 12 determines whether lost split audio data exists among the received split audio data as the confirmation result. If a determination is made that lost split audio data exists, the controller 100 of the receive terminal 12 requests split audio data corresponding to the lost split audio data from the transmit terminal 10 in step 530. For example, the controller 100 of the receive terminal 12 confirms that the number of the received split audio data is 10 as illustrated in FIG. 6C by analyzing the header information in step 510. Then, the controller 100 of the receive terminal 12 checks the stored split audio data in step 520 and determines in step 525 that second split audio data does not exist. Accordingly, the controller 100 of the receive terminal 12 requests split audio data corresponding to the lost second split audio data from the transmit terminal 10.

In step 535, the controller 100 of the receive terminal 12 receives the split audio data corresponding to the lost split audio data from the transmit terminal 10 and stores the received split audio data corresponding to the lost split audio data in the memory 140. A re-loss of split audio data is prevented by consecutively receiving the second split audio data from the transmit terminal 10 at least twice. Thus, in step 540, the controller 100 of the receive terminal 12 compensates for the lost split audio data by selecting a normal one of the split audio data received at least twice and stores the compensated split audio data in the memory 140. In step 545, the controller 100 of the receive terminal 12 combines the split audio data including the compensated split audio data as illustrated in FIGs. 6D and 6E to generate audio data with the same type as that of the audio data originally input through the microphone by the transmit terminal 10. In step 550, the controller 100 of the receive terminal 12 outputs the combined split audio data to the speaker connected to the audio processing unit 130 of the receive terminal 12.

When the receive terminal 12 is in the weak electric field call mode, the receive terminal 12 receives split audio data including header information containing split audio data information from the transmit terminal 10. The controller 100 of the receive terminal 12 determines whether lost split audio data exists by comparing the received header information to the received split audio data. The controller 100 of the receive terminal 12 compensates for the lost split audio data by requesting re-transmission of split audio data corresponding to the lost split audio data from the transmit terminal 10 according to the determination result. The controller 100 of the receive terminal 12 combines the split audio data including the compensated split audio data and outputs the combined split audio data to the speaker of the receive terminal 12.

In an exemplary embodiment of the present invention, the transmit terminal 10 re-transmits split audio data corresponding to lost split audio data requested by the receive terminal 12 several times after transmitting all split audio data to the receive terminal 12. When the transmit terminal 10 transmits split audio data, the transmit terminal 10 can generate group split audio data by grouping the split audio data. The transmit terminal 10 transmits the generated group split audio data several times. The receive terminal 12 can compensate for lost split audio data by confirming entire split audio data from the group split audio data that is received several times.

A method and apparatus for transmitting/receiving audio data in a mobile communication terminal according to exemplary embodiments of the present invention is described above. Transmission/reception of the audio data can be smoothly performed in a weak electric field call mode to output normal audio data by splitting audio data, sequentially transmitting the split audio data, and compensating for lost split audio data.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of transmitting and receiving audio data in a mobile communication terminal, the method comprising the steps of:
generating n split audio data within a transmit terminal by splitting input audio data;
transmitting the n split audio data sequentially by the transmit terminal to a receive terminal;
receiving the n split audio data transmitted from the transmit terminal by the receive terminal; and
outputting audio data within the receive terminal by combining the received n split audio data.

2. The method of claim 1, wherein when at least one of the transmit terminal and the receive terminal senses a weak electric field in a phone call mode, the phone call mode is changed to a weak electric field call mode.

3. The method of claim 2, wherein the weak electric field call mode uses a packet data transmission method in which the input audio data is split in a packet basis and transmitted.

4. The method of claim 1, wherein the transmit terminal generates the n split audio data by splitting the input audio data by a reference amount.

5. The method of claim 1, wherein when the transmit terminal transmits the split audio data, a header comprising information on the split audio data is added, and the receive terminal receives the split audio data and the header transmitted from the transmit terminal.

6. The method of claim 1, further comprising the steps of:
the receive terminal storing the n split audio data received from the transmit terminal;
the receive terminal determining whether lost split audio data exists among the stored n split audio data and transmitting information on the lost split audio data to the transmit terminal if the lost split audio data exists; and
the receive terminal compensating for the lost split audio data by receiving normal split audio data corresponding to the lost split audio data from the transmit terminal.

7. The method of claim 6, wherein the transmit terminal transmits the normal split audio data corresponding to the lost split audio data at least twice when transmitting, and the receive terminal compensates for the lost split audio data by selecting one of the normal split audio data transmitted at least twice when compensating.

8. The method of claim 6, further comprising the step of the receive terminal outputting the same audio data as the audio data input to the transmit terminal by combining the compensated split audio data.

9. A method of transmitting and receiving audio data in a mobile communication terminal, the method comprising the steps of:
changing a phone call mode to a weak electric field call mode when at least one of transmit and receive terminals of the audio data senses a weak electric field;
generating n split audio data within the transmit terminal by splitting input audio data;
transmitting the n split audio data sequentially by the transmit terminal to the receive terminal;
receiving the n split audio data transmitted from the transmit terminal by the receive terminal and determining whether a loss of the split audio data exists;
requesting split audio data by the receive terminal corresponding to the lost split audio data from the transmit terminal if the lost split audio data exists
as the determination result; and
compensating for the lost split audio data by the receive terminal by receiving the requested split audio data from the transmit terminal.

10. The method of claim 9, wherein when the transmit terminal transmits the split audio data corresponding to the lost split audio data requested by the receive terminal, the transmit terminal transmits the same split audio data at least twice.

11. The method of claim 9, wherein the change to the weak electric field call mode is at least one of set by a user and automatically performed when a weak electric field is sensed.

12. A method of transmitting and receiving audio data in a mobile communication terminal, the method comprising the steps of:
changing a phone call mode to a weak electric field call mode when at least one of transmit and receive terminals of the audio data senses a weak electric field;
generating n split audio data within the transmit terminal by splitting input audio data;
generating group split audio data within the transmit terminal by grouping
the n split audio data;
transmitting the group split audio data within the transmit terminal to the receive terminal at least twice;
determining by the receive terminal whether a loss of the group split audio data repeatedly received at least twice exists; and
compensating by the receive terminal for lost split audio data using the group split audio data if the lost split audio data exists as the determination result.

13. The method of claim 12, wherein the group split audio data is generated by combining the generated n split audio data in a reference number.

14. An apparatus for transmitting and receiving audio data in a mobile communication terminal, the apparatus comprising:
a transmit terminal for changing a phone call mode to a weak electric field call mode when a weak electric field is sensed in the phone call mode, generating n split audio data by splitting input audio data, transmitting the generated n split audio data to a receive terminal, and re-transmitting lost split audio data to the receive terminal if information on the lost split audio data is received from the receive terminal; and
a receive terminal for changing the phone call mode to the weak electric field call mode when a weak electric field is sensed in the phone call mode, receiving the n split audio data from the transmit terminal, determining whether the received n split audio data is lost, transmitting information on the lost split audio data, re-receiving split audio data corresponding to the lost split audio data from the transmit terminal, and compensating for the lost split audio data.

15. The apparatus of claim 14, wherein the transmit terminal transmits normal split audio data corresponding to the lost split audio data more than a reference number of times, and the receive terminal compensates for the lost split audio data by selecting one of the normal split audio data received from the transmit terminal more than the reference number of times.

16. The apparatus of claim 14, wherein the receive terminal outputs the same audio data as the audio data input to the transmit terminal by combining the compensated split audio data.
